# FASCICULE DE BREVET EUROPEEN

(11) **EP 3 948 407 B1**
(45) Date de publication et mention de la délivrance du brevet: **19.11.2025**
(21) Numéro de dépôt: 20714657.2
(22) Date de dépôt: 03.04.2020
(51) Int. Cl.: G02F 1/01, G02B 5/00

(54) **CAVITE ELECTROMAGNETIQUE A MODES DE TAMM**
ZUR UNTERSTÜTZUNG VON TAMM-MODI FÄHIGER ELEKTROMAGNETISCHER HOHLRAUM
ELECTROMAGNETIC CAVITY ABLE TO SUPPORT TAMM MODES

(30) Priorité: 05.04.2019 FR 1903673
(43) Date de publication de la demande: 09.02.2022
(73) Titulaire: Centre national de la recherche scientifique, 75016 Paris (FR); Université Claude Bernard Lyon 1, 69100 Villeurbanne (FR); SORBONNE UNIVERSITE, 75006 Paris (FR); Ecole Normale Supérieure de Paris, 75320 Paris Cedex 05 (FR); Université Paris Cité, 75006 Paris (FR)
(72) Inventeur: MANGENEY, Juliette, 94230 CACHAN (FR); DHILLON, Sukhdeep, 92340 BOURG-LA-REINE (FR); SYMONDS, Clémentine, 69001 LYON (FR); BELLESSA, Joël, 69006 LYON (FR); MESSELOT, Simon, 94110 Arcueil (FR)
(74) Mandataire: IPAZ
(86) Numéro de dépôt international: PCT/EP2020/059572
(87) Numéro de publication internationale: WO 2020/201513

(56) Documents cités:
- CN-A- 103 728 275
- US-A1- 2017 254 751
- SHUAI WANG ET AL: "Tunable Terahertz Absorption with Optical Tamm State in the Graphene-Bragg Reflector Configuration", ADVANCES IN CONDENSED MATTER PHYSICS, vol. 2018, 5 August 2018 (2018-08-05), US, pages 1 - 6, XP055655106, ISSN: 1687-8108, DOI: 10.1155/2018/3063161
- I. YU. CHESTNOV ET AL: "One-dimensional Tamm plasmons: Spatial confinement, propagation, and polarization properties", PHYSICAL REVIEW B, vol. 96, no. 24, 1 December 2017 (2017-12-01), XP055655076, ISSN: 2469-9950, DOI: 10.1103/PhysRevB.96.245309
- YAO YU ET AL: "terahertz distributed-Bragg-reflector micro cavities", OPTICS COMMUNICATIONS, vol. 426, 1 November 2018 (2018-11-01), AMSTERDAM, NL, pages 84 - 88, XP055655118, ISSN: 0030-4018, DOI: 10.1016/j.optcom.2018.05.010
- AHMAD HOSSEINBEIG ET AL: "A reconfigurable subwavelength plasmonic fano nano-antenna based on split ring resonator", JOURNAL OF MAGNETISM AND MAGNETIC MATERIALS, vol. 423, 1 February 2017 (2017-02-01), AMSTERDAM, NL, pages 203 - 207, XP055698852, ISSN: 0304-8853, DOI: 10.1016/j.jmmm.2016.09.076
- BAPTISTE AUGUIÉ ET AL: "Critical coupling to Tamm plasmons", JOURNAL OF OPTICS, vol. 17, no. 3, 13 February 2015 (2015-02-13), GB, pages 035003, XP055655072, ISSN: 2040-8978, DOI: 10.1088/2040-8978/17/3/035003
- WANG LI ET AL: "Controllable Dual Hybrid Tamm Plasmon Modes in Binary Gold Nanodisk Arrays and Distributed Bragg Reflector Structure", PLASMONICS, SPRINGER US, BOSTON, vol. 14, no. 5, 23 January 2019 (2019-01-23), pages 1091 - 1098, XP036898993, ISSN: 1557-1955, [retrieved on 20190123], DOI: 10.1007/S11468-018-00897-3

## Description

### Domaine technique :

[La présente invention concerne une cavité électromagnétique à structure de Tamm possédant au moins une fréquence de résonance (Térahertz) THz.

### Technique antérieure :

Les documents suivants divulguent des techniques de traitement d'ondes électromagnétiques de l'art antérieur : XP055655106, US2017/254751A1, XP055655076, XP055655118, XP055698852, CN103728275A, XP055655072 et XP036898993.

Par la suite appellera cavité THz une cavité résonante possédant au moins une fréquence de résonance dans la gamme typique de 0.1 THz à 10 THz.

Les cavités THz sont utilisées pour le développement des nombreux composants passifs et actifs tels que les sources de rayonnement THz, les détecteurs, les senseurs, les modulateurs et les filtres. De plus, ces cavités sont primordiales pour des dispositifs THz visant à réaliser un couplage fort rayonnement-matière. Les cavités THz permettent également d'améliorer la sensibilité de systèmes de spectroscopie en permettant d'augmenter fortement la longueur d'interaction entre le milieu absorbant et le rayonnement. Les cavités THz actuelles se déclinent en deux catégories principales : les résonateurs optiques ou électroniques.

Les résonateurs électroniques sont basés sur des structures métalliques permettant un confinement très sous-longueur d'onde du rayonnement car les effets de propagation sont négligeables et le volume modal n'y est pas limité directement par la longueur d'onde. Ces structures métalliques sont par exemple des antennes de type patch resonator ou des résonateurs de type split ring resonator. Cependant, ces résonateurs électroniques possèdent un facteur de qualité faible (typiquement de 10 à température ambiante) ce qui représente une limitation importante pour la réalisation de nombreux composants THz.

En revanche, les résonateurs optiques comme les cavités Fabry-Pérot possèdent un facteur de qualité très élevé, ce qui est une caractéristique très attractive pour le développement de nombreux composants THz. Il est notamment connu de réaliser des cavités THz adaptées pour réaliser un couplage fort lumière-matière entre des photons de cavités et des gaz d'électrons 2D (Zhang, Qi, et al. "Collective non-perturbative coupling of 2D electrons with high-quality-factor terahertz cavity photons." Nature Physics 12.11 (2016): 1005).

Cependant, les modes de ces cavités sont basés sur des ondes stationnaires avec des effets de propagation dominants. En conséquence, le volume modal des résonateurs optiques est important ; en effet, une des dimensions du résonateur doit être commensurable avec la longueur d'onde de résonance (avec λ_{eff}/2 la demi-longueur d'onde au sein de la couche active). Cette limite de diffraction est défavorable pour une interaction importante des modes du résonateur optique avec des éléments actifs ou passifs de petites tailles. Ainsi, il est très difficile de coupler efficacement des éléments de taille caractéristique de quelques dizaines de microns avec les modes des résonateurs optiques usuels aux fréquences THz. De plus, la fréquence de résonance de ces cavités optiques ne peut être ajustée que par la longueur effective du résonateur et le profil des modes est difficilement contrôlable ou modifiable.

Il n'existe pas actuellement de résonateurs THz qui associent un facteur de qualité élevé avec des modes confinés dans un volume relativement petit et qui permettent également un contrôle des propriétés des modes optiques.

L'invention vise à résoudre les limitations précitées de l'art antérieur et propose un nouveau type de résonateur THz, basé sur une cavité à modes de Tamm.

### Résumé de l'invention :

A cet effet, un objet de l'invention est une cavité électromagnétique à modes de Tamm possédant une fréquence de résonance dans le domaine THz, comportant :
- un miroir interférentiel réfléchissant dans le domaine THz constitué d'un empilement de couches diélectriques comprenant une alternance, selon une direction z, de deux couches différentes, une couche dite d'indice de réfraction élevé et un couche dite d'indice de réfraction faible, l'indice de la couche de réfraction faible étant inférieure à celle de la couche d'indice de réfraction élevée, fabriqué par empilement mécanique de couches ou par assemblage de couches diélectrique les unes sur les autres ;
- une couche supérieure métallique déposée ou reportée sur une couche supérieure de diélectrique dudit miroir interférentiel de manière à former une structure supportant au moins un mode de Tamm dans le domaine THz, la couche supérieure métallique étant structurée de manière à former une antenne possédant une fréquence de résonance égale à celle de la cavité électromagnétique.

Selon des modes particuliers de l'invention :
- au moins l'une des couches d'indice de réfraction faible du miroir interférentiel est formée par un espaceur séparant deux couches d'indice de réfraction élevé de manière à obtenir une couche d'air entre deux couches d'indice de réfraction élevé ;
- la couche supérieure métallique est continue ;
- la couche supérieure métallique est structurée de manière à contrôler le mode transverse et la polarisation du ou des modes de Tamm ;
- la couche supérieure métallique structurée forme une antenne de type bowtie, patch, dipolaire ou un split-ring resonator ;
- les couches diélectriques sont en silicium haute résistivité, en GaAs semi-isolant ou en quartz ;
- les couches diélectriques sont en un film polymère tel que le Kapton ;
- la cavité comprend une couche dite couche miroir au-dessus de la couche supérieure métallique et séparée par une couche de diélectrique ladite couche miroir étant constituée d'une couche inférieure métallique et d'une couche supérieure support ;
- la cavité comprend un élément actif d'une taille caractéristique de comprise entre 1 et 100 microns, de préférence 10 et 40 microns placé dans la cavité de manière à pouvoir être couplé au mode de Tamm excité dans ladite cavité ;
- l'élément actif est placé au sein d'une couche d'air du miroir interférentiel située en dessous de la couche supérieure diélectrique ;
- l'élément actif est en graphène ;
- la couche supérieure métallique est une couche de supraconducteur.

Un autre objet de l'invention est une cavité électromagnétique à modes de Tamm possédant une fréquence de résonance dans le domaine THz, comportant :
- un miroir interférentiel réfléchissant dans le domaine THz constitué d'un empilement de couches diélectriques comprenant une alternance, selon une direction z, de deux couches différentes, une couche dite d'indice de réfraction élevé et un couche dite d'indice de réfraction faible, l'indice de la couche de réfraction faible étant inférieure à celle de la couche d'indice de réfraction élevée, fabriqué par empilement mécanique de couches ou par assemblage de couches diélectrique les unes sur les autres ;
- une couche supérieure métallique déposée ou reportée sur une couche supérieure de diélectrique dudit miroir interférentiel de manière à former une structure supportant au moins un mode de Tamm dans le domaine THz, la couche supérieure métallique étant structurée de manière à former un réseau de bandes métalliques de largeur s, de période p, séparée d'une distance a et de facteur de remplissage ff=s/p avec p=s+a.

Selon des modes particuliers de l'invention :
- le facteur de remplissage ff du réseau de bandes métalliques varie selon la direction x de manière à permettre le couplage d'une pluralité de fréquences THz différentes d'un rayonnement incident avec ladite cavité électromagnétique.

Un autre objet de l'invention est un procédé d'utilisation d'une cavité électromagnétique selon l'une quelconque des revendications précédentes, comprenant :
- l'illumination de ladite cavité par un rayonnement incident se propageant selon ladite direction z à une fréquence THz égale à la fréquence de résonance de ladite cavité ;
- l'excitation d'un mode de Tamm à une fréquence de résonance de la cavité.

Selon des modes particuliers de ce procédé d'utilisation :
- l'angle d'incidence du rayonnement incident sur ladite cavité est non nul, préférentiellement supérieur à 25° ;
- il comprend la transmission d'un rayonnement THz.

### Brève description des figures :

D'autres caractéristiques, détails et avantages de l'invention ressortiront à la lecture de la description faite en référence aux dessins annexés donnés à titre d'exemple et qui représentent, respectivement :
[Fig. 1], une cavité THz électromagnétique à modes de Tamm selon un premier mode de réalisation de l'invention ;
[Fig. 2], la réflectivité de la cavité électromagnétique du premier mode de réalisation de l'invention en fonction de la longueur d'onde du rayonnement incident ;
[Fig. 3A], une cavité THz électromagnétique à modes de Tamm selon un deuxième mode de réalisation de l'invention, accordable en fréquence de résonance ;
[Fig. 3B], le profil du champ électromagnétique au sein de la cavité THz électromagnétique à modes de Tamm selon le deuxième mode de réalisation de l'invention.
[Fig. 4A] et [Fig. 4B], l'évolution, en fonction du facteur de remplissage, de la fréquence de résonance et du facteur de qualité de la cavité THz électromagnétique à modes de Tamm du deuxième mode de réalisation ;
[Fig. 5A] et [Fig. 5B], respectivement une cavité THz électromagnétique à modes de Tamm selon un troisième mode de réalisation de l'invention et l'évolution, en fonction du facteur de remplissage, du facteur de qualité de ladite cavité ;
[Fig. 6], une cavité THz électromagnétique à modes de Tamm selon un quatrième mode de réalisation de l'invention ;
[Fig. 7], une cavité THz électromagnétique à modes de Tamm selon un cinquième mode de réalisation de l'invention.

### Description détaillée :

Des résonateurs optiques combinant faibles pertes et volume modal réduit sont connus dans la gamme spectrale du proche infrarouge. Ceux-ci sont basés sur des cavités à modes de Tamm, qui combinent un miroir métallique et un miroir interférentiel de type Distributed Bragg Reflector ou DBR, où le DBR est réalisé par épitaxie de couches successives de diélectriques ou de semiconducteurs (Thèse de Guillaume Lheureux. Étude de l'effet laser dans les structures à plasmon Tamm. Physique des plasmas [physics.plasm-ph]. Université Claude Bernard - Lyon I, 2015. Français. <NNT : 2015LYO10341>. <tel-01327966>). Ces cavités à modes de Tamm permettent un bon confinement du mode à l'interface entre le DBR et le miroir métallique déposé à même le DBR. D'autre part, les pertes dues au métal y sont moindres du fait d'une distribution du mode très majoritairement dans le DBR.

Cette solution n'est cependant pas transposable dans la gamme THz par les méthodes de fabrication usuelles du fait des longueurs d'onde de l'ordre de la centaine de micron, qui impliquent pour le DBR des épaisseurs de couches diélectriques ou de semiconducteurs de plusieurs dizaines de microns. En effet, la réalisation du DBR est généralement obtenue par croissance épitaxiale des différentes couches, ce qui n'est pas possible pour des épaisseurs aussi importantes.

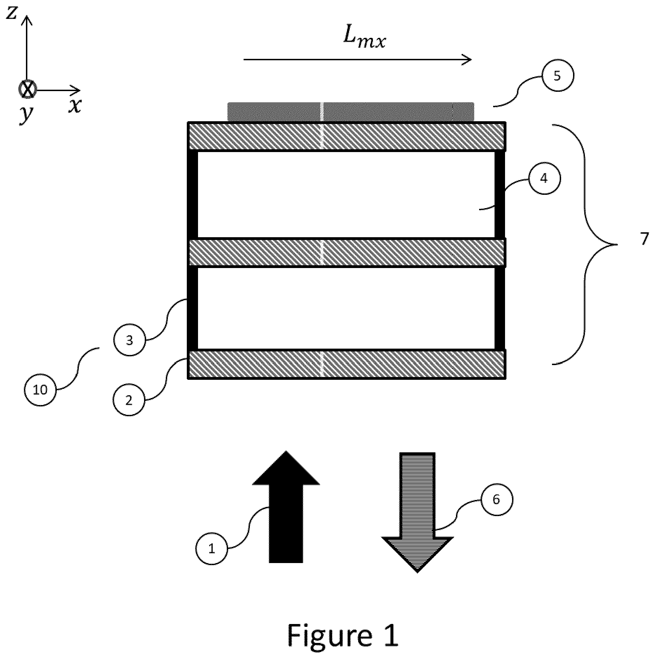

L'invention repose sur un résonateur à modes de Tamm adaptée à la gamme spectrale THz. La figure 1 représente une vue schématique de profil d'une cavité électromagnétique THz 10 à modes de Tamm selon un premier mode de réalisation de l'invention. Dans ce mode de réalisation, la cavité est formée d'un empilement périodique 7 et d'une couche métallique 5. L'empilement périodique 7 comprend une alternance, selon une direction z, de couches diélectriques ou semiconductrices d'indice de réfraction élevé et faible formant un miroir interférentiel ou DBR (distributed Bragg reflector), et présentant une couche supérieure d'indice de réfraction élevé. Par indice de réfraction faible et élevé, on entend que l'indice de réfraction dit élevé est supérieur à l'indice de réfraction dit faible. Il réfléchit une certaine plage de longueurs d'onde (appelée bande interdite) dans la gamme spectrale du rayonnement THz incident 1 se propageant selon la direction z. L'épaisseur de chacune des couches est égale à environ un multiple impair de λ/4n (n indice de réfraction dans la couche) λ étant la longueur d'onde centrale de la bande interdite de cet empilement périodique, bande interdite contenant la longueur d'onde de résonance de la cavité à modes de Tamm. Cette possibilité d'utiliser des couches diélectriques ou semiconductrices plus épaisses que λ/4n est très importante car elle permet notamment d'utiliser des couches épaisses lorsque les mêmes couches de faibles épaisseurs sont technologiquement difficiles à obtenir comme c'est le cas du silicium.

La fabrication de cet empilement 7 présente l'avantage d'être réalisée sans procédé de microfabrication tel que l'épitaxie de semiconducteur utilisé dans le domaine infrarouge-visible. Des couches diélectriques disponibles commercialement (dont des exemples seront présentés ci-après) sont simplement empilées mécaniquement les unes sur les autres selon la direction z.

Dans un exemple non-limitatif, l'empilement 7 est constitué d'une alternance de couches de silicium haute résistivité 2 (indice de réfraction élevé) et d'air 4 (indice de réfraction faible) selon une direction z. Dans cet exemple, les couches d'air et de silicium haute résistivité ont des épaisseurs eₐᵢᵣ=75µm et e_{Si}=70µm d'épaisseur respectivement. La bande interdite du miroir interférentiel formé par l'empilement 7 est centrée sur λ_{B}=300µm (équivalent à 1THz) ; les couches faisant respectivement eₐᵢᵣ=λ_{B}/4nₐᵢᵣ et e_{Si}=3λ_{B}/4n_{Si} (nₐᵢᵣ l'indice de l'air dans le THz et n_{Si} l'indice du silicium dans le THz). Les couches d'air sont formées entre les couches de Silicium à l'aide d'un espaceur 3. Selon le mode de réalisation de la figure 1, la cavité 10 comporte un empilement 7 de deux paires de couches et une couche supérieure de silicium. Dans un autre mode de réalisation, la cavité comporte un empilement périodique d'une pluralité de paires couches séparées par des espaceurs respectifs. Dans un autre mode de réalisation, les couches en diélectriques de l'empilement 7 sont des films polymères flexibles qui peuvent présenter de très faibles pertes dans la gamme THz comme par exemple du Kapton, ou sont du GaAs semi-isolant ou du quartz.

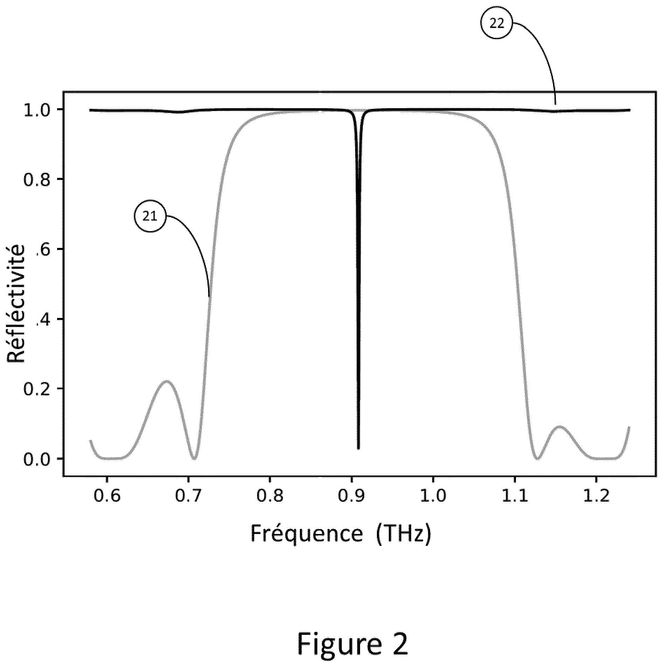

A l'aide de la méthode des matrices de transfert, bien connue de l'homme de l'art, il est possible d'effectuer le calcul de la réflectivité du miroir de Bragg 7 de la cavité 10 en fonction de la fréquence d'un rayonnement incident 1. La réflectivité en fonction de la fréquence est représentée par la courbe 21 de la figure 2 et met en évidence une certaine gamme de fréquences où la réflectivité est élevée, avant de diminuer en dehors de cette région. Il s'agit de la région de bande interdite du miroir de Bragg (DBR), de fréquence centrale f_{B}=c/λ_{B}.

L'empilement de la cavité 10 de la figure 1 est recouvert par une couche supérieure métallique 5 continue. Par métallique, on entend ici un matériau avec une conduction électrique de type métallique. Dans le mode de réalisation de la figure 1, la couche supérieure métallique est une couche de 200nm d'épaisseur d'or. Dans ce mode de réalisation, la couche supérieure métallique ne présente pas de discontinuité et ne recouvre pas entièrement la couche supérieure en diélectrique de l'empilement 7. Dans un autre mode de réalisation la couche supérieure métallique recouvre complétement et sans discontinuité la couche supérieure en diélectrique. Elle est déposée au-dessus de la dernière couche de diélectrique de l'empilement 7 par des techniques connues de l'homme de l'art, par exemple par dépôt sous vide. Dans un autre mode de réalisation, la couche métallique est remplacée par une couche de supraconducteur, comme par exemple un supraconducteur de type niobate. Alternativement la couche métallique supérieure peut être en graphène dopé. Alternativement cette couche peut être rapportée, c'est-à-dire apposée puis collée à l'empilement.

L'ajout d'une couche supérieure métallique 5 permet de confiner le champ électromagnétique à l'interface entre le DBR et la couche métallique 5 pour un rayonnement incident 1 de vecteur d'onde perpendiculaire à l'interface, se propageant selon la direction z. Ce mode existe pour la polarisation transverse électrique (TE) et la polarisation transverse magnétique (TM). Le confinement sub-longueur d'onde des modes coté métal est réalisé grâce à la constante diélectrique négative très importante du métal. En revanche, coté diélectrique, le confinement est réalisé grâce à la présence de la bande interdite du DBR. Dans le mode de réalisation de la figure 1, l'accord de phase entre le miroir métallique 5 et l'empilement 7 induit une fréquence de résonance des modes de Tamm à la fréquence centrale du DBR.

Le DBR 7 du mode de réalisation de la figure 1 possédant une réflectivité centrée en λ_{B}=300µm, on a alors une fréquence du mode Tamm fondamental d'environ f_{Tamm}=ω_{Tamm}/2π=0.91THz. Il existe de nombreux autres modes Tamm dans la cavité de fréquences supérieures. Par la suite on appellera cette fréquence du mode Tamm, « fréquence de résonance de la cavité ». Ainsi, un rayonnement incident 1 à cette fréquence, se propageant selon la direction z avec une polarisation TM ou TE sera couplé dans la cavité 10 et excitera le mode Tamm à l'interface entre la couche supérieure métallique et la couche supérieure de diélectrique dudit miroir de Bragg. Pour permettre l'excitation du mode de Tamm, l'écart entre une fréquence du rayonnement incident et la fréquence de résonance de la cavité est inférieure à la largeur spectrale du mode résonant. La réflectivité de la cavité de la figure 1 en fonction de la longueur d'onde du rayonnement incident 1 est présentée dans la courbe 22 de la figure 2 obtenue par la méthode des matrices de transfert. Par rapport à la réflectivité du DBR 7 seul (courbe 21) on observe un pic d'absorption de la cavité 10 correspondant au mode Tamm, dans la bande interdite du DBR.

Ce mode Tamm possède une extension longitudinale (selon la direction z de λ_{eff}/2 dans le DBR 7. De plus, dans la direction transverse (selon les directions x et y), le champ électrique du mode Tamm est confiné dans la région du DBR située en dessous de la couche métallique supérieure. L'extension spatiale transverse selon la direction x du mode de Tamm est donc essentiellement limitée par la dimension transverse L_{(m,x)} selon la direction x de la couche supérieure métallique 5 rendant possible un confinement transverse du mode Tamm. De même l'extension spatiale transverse selon la direction y du mode de Tamm est donc essentiellement limitée par la dimension transverse selon la direction y de la couche supérieure métallique 5.

Le facteur de qualité Q de la cavité 10 du mode de réalisation de la figure 1 est de 100.

Dans un autre mode de réalisation, la couche supérieure métallique est un matériau conducteur de plus faible réflectivité comme le graphène et la cavité 10 fonctionne en mode transmission. Dans un autre mode de réalisation, les rayonnements incident 1 et réfléchit 6 sont à incidence oblique. Par oblique on entend ici que l'angle que l'angle que forme la direction de propagation du rayonnement incident par rapport à la direction z de l'empilement est non nul, préférentiellement supérieur à 25°.

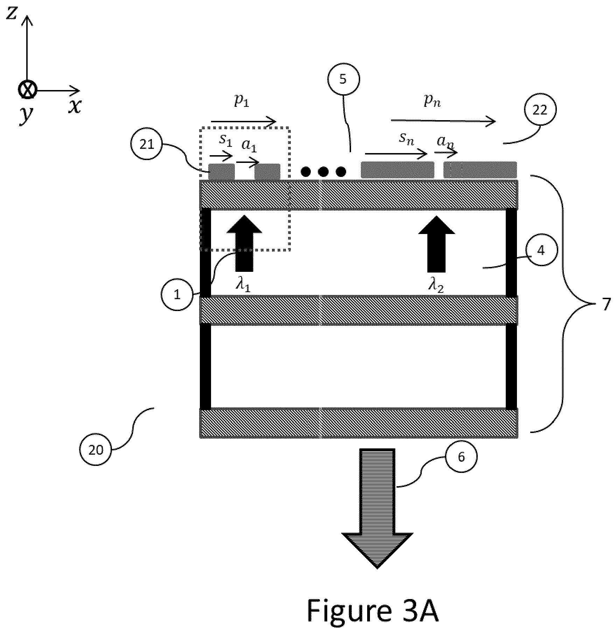

[Fig. 3A] illustre une vue schématique de profil d'une cavité électromagnétique THz 20 à modes de Tamm selon un deuxième mode de réalisation de l'invention. Dans ce mode de réalisation, le DBR est identique à celui de la cavité 10 mais la couche supérieure métallique 5 est discontinue. Elle est structurée de manière à former un réseau de bandes métalliques de largeur s et séparée d'une distance a et de facteur de remplissage ff=s/p avec p=s+a. Il est connu que la fréquence de résonance de la cavité 20 et le facteur de qualité de la cavité 20 diminuent lorsque le facteur de remplissage diminue.

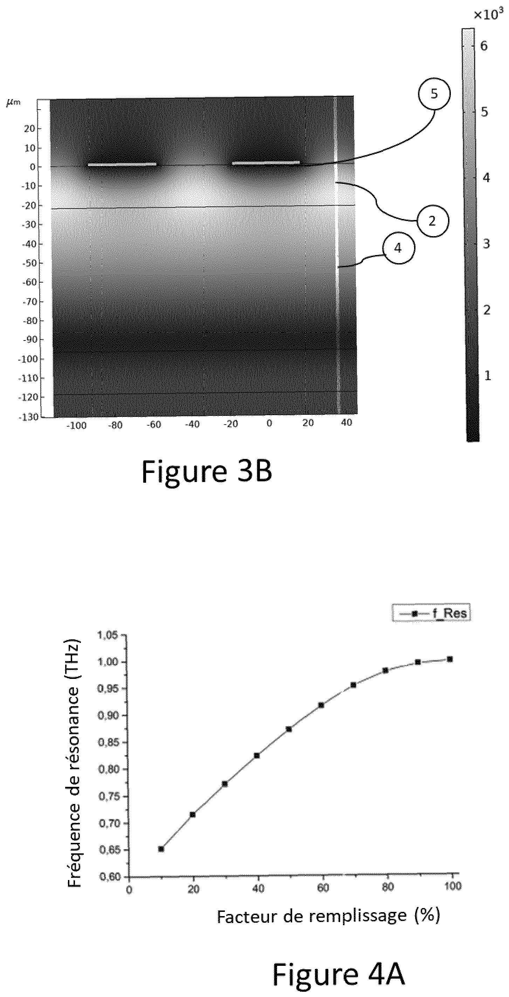

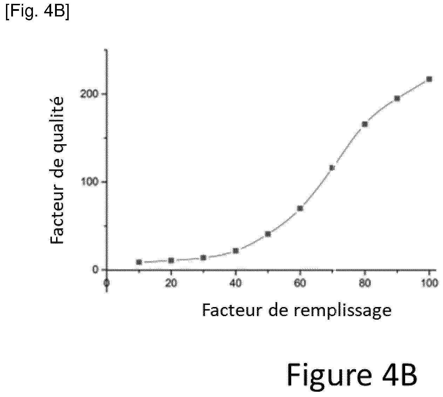

[Fig. 4A] et [Fig. 4B] présentent respectivement l'évolution de la fréquence de résonance et du facteur de qualité en fonction du facteur de remplissage de la cavité de Tamm 20, dans le cas où la couche supérieure métallique est structurée de manière à ce que le facteur de remplissage soit constant selon la direction x. Ici, la périodicité p de la cavité de Tamm est fixée est vaut 75µm alors que la largeur des bandes métalliques s varie avec ff. On observe que la fréquence de résonance et le facteur de qualité augmentent avec le facteur de remplissage. Il est donc possible d'accorder la fréquence de résonance de la cavité 20 en variant le facteur de remplissage ff pour différentes régions de la couche supérieure métallique 5.

Ainsi, dans le mode de réalisation de la figure 3A, la couche supérieure métallique 5 est structurée de manière à comporter une pluralité n de facteurs de remplissage du réseau de bandes métalliques différents, variant selon la direction x, de manière à permettre le couplage d'une pluralité de fréquences THz différentes du rayonnement incident avec la cavité 20 et l'excitation de modes Tamm de fréquences différentes. Concrètement, la couche métallique supérieure structurée possède plusieurs régions différentes, chacune possédant un facteur de remplissage différent, donnant à l'ensemble formé par cette région et le DBR en dessous une fréquence de résonance différente des autres.

Aussi, dans la région 21 de la couche supérieure métallique, le facteur de remplissage vaut ff₁=s₁/p₁ de manière à coupler un rayonnement incident à la longueur d'onde λ₁ en excitant un mode Tamm à cette longueur d'onde. Dans la région 22 de la couche supérieure métallique, le facteur de remplissage vaut ffₙ=sₙ/pₙ de manière à coupler un rayonnement incident à la longueur d'onde λₙ en excitant un mode Tamm à cette longueur d'onde.

Dans un autre mode de réalisation, la couche métallique supérieure structurée possède une unique région et un unique facteur de remplissage, utilisé pour d'ajuster très précisément la fréquence de résonance de la cavité après fabrication de l'empilement (DBR).

Dans un exemple donné à titre non limitatif, la couche supérieure métallique 5 de la cavité 20 est structurée de manière à ce que le facteur de remplissage varie progressivement de 10% à 100% selon la direction x afin de passer d'une fréquence de résonance f₁=0.65 THz pour la région 21 de la cavité 20 jusqu'à une fréquence de résonance f₂=1THz pour la région 21 de la cavité 20, respectivement (voir figure 4A).

Comme le montrent les figures 4A et 4B, cette structure de la couche supérieure 5 de la figure 3A permet une accordabilité de la cavité 20 en fréquence de résonance d'environ 35% au détriment du facteur de qualité qui diminue avec le facteur de résonance. En effet, le facteur de qualité vaut environ Q=10 pour un facteur de remplissage ff=10% et environ Q=200 pour un facteur de remplissage ff=90%.

[Fig. 3B] représente le profil du champ électrique du mode Tamm à λ₁=c/f₁ dans la région 21 de la cavité 20, pour un facteur de remplissage ff=0.5 et p=75µm, donnant une fréquence de résonance f₁=0.87THz. Grâce au confinement du champ électrique entre les bandes métallique au-dessus de la couche supérieure de diélectrique de l'empilement, le champ électrique est localisé dans cette région, donnant accés à une amplitude de champ électrique plus élevée (environ 3.5 V/m). Par ailleurs on observe qu'en dessous de la couche supérieure en diélectrique du DBR 7, le champ électrique est plus intense (supérieur à 5 V/m) et plus encore dans les régions directement en dessous des zones non recouvertes par la couche supérieure métallique.

Il s'agit d'une caractéristique supplémentaire par rapport au mode de réalisation de la figure 1, où le champ électrique est confiné de façon homogène à l'interface diélectrique-air. Cet effet est lié à la distribution périodique sous-longueur d'onde du métal, qui apporte une exaltation du champ entre les bandes

La structuration de la couche supérieure métallique permet donc une exaltation et un confinement du champ électrique du mode Tamm.

C'est la présence d'air entre les couches de diélectrique et entre les bandes métalliques qui permet facilement de placer un élément actif dans les régions de la cavité 20 où le champ électrique du mode Tamm est le plus intense. Il est ainsi possible de réaliser facilement un couplage lumière THz-matière avec des éléments actifs de dimensions caractéristiques de 1 à 100 microns, préférentiellement 10 à 40 microns, et une haute densité d'énergie. Par dimension caractéristique on entend la plus grande dimension d'un élément (par exemple la diagonale dans le cas où l'élément est un cube).

Dans ce mode de réalisation, la cavité peut être utilisée en géométrie de transmission car la couche supérieure métallique à une transmission non nulle.

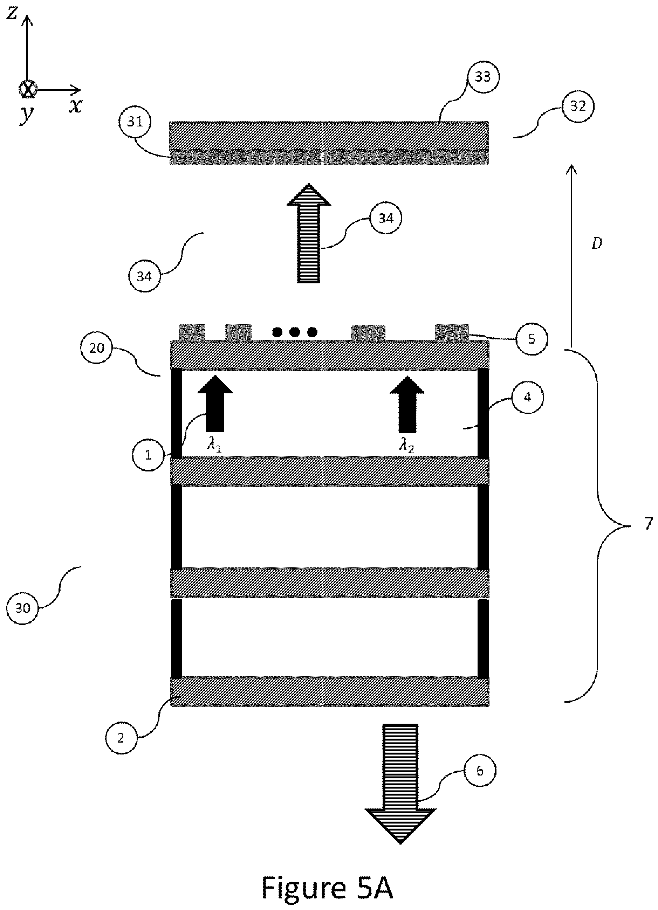

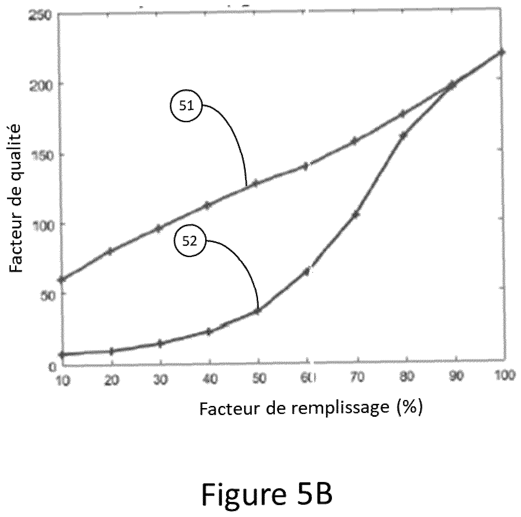

Afin d'obtenir une cavité THz accordable en fréquence de résonance tout en maintenant un facteur de qualité élevé, la cavité 30 du troisième mode de réalisation de l'invention, schématisée de profil dans la figure 5 comprend un miroir 31. Ce miroir 31 est composé d'une couche inférieure métallique 32 et une couche support 33. Dans le mode de réalisation de la figure 5, l'ensemble 20 formé par le DBR 7 et la couche supérieure métallique 5 est identique à celui de la figure 3A et la couche inférieure métallique 32 du miroir 31 est en or et la couche supérieure support 33 du miroir 31 est en silicium. Le miroir 31 est placé au-dessus de la couche supérieure métallique 5 à une distance D=λₘ/4 de cette dernière afin de maximiser l'intensité du champ électrique au niveau de la couche supérieure métallique et dans la région en dessous de la couche supérieure en diélectrique de l'empilement 7. Le miroir est séparé de la couche par une couche de diélectrique 34. Dans l'exemple de la figure 5, cette couche est une couche d'air. Ici, λₘ correspond à la plus grande longueur de résonance de la cavité 30, soit celle correspondant à la région 21 (λ₁=c/f₁). Dans un autre mode de réalisation, λₘ correspondant à la moyenne des longueurs d'onde de résonance de la cavité 30. Le miroir 30 permet de réfléchir le rayonnement transmis 34 par l'ensemble 20 formé par le DBR 7 et la couche supérieure métallique 5 et donc une plus grande réflectivité de l'ensemble cavité+miroir. Ce rayonnement transmis 34 est dû à la structuration de la couche métallique 5 et n'est pas présent, ou bien moins intense, dans le mode de réalisation de la figure 1 où la couche supérieure métallique 5 n'est pas discontinue. Le miroir 31 peut être séparé de la couche supérieure métallique par un espaceur. La courbe 51 de la figure 5B montre l'évolution du facteur de qualité de la cavité 30 (avec le miroir 31 au-dessus) en fonction du facteur de remplissage, dans le cas où la couche supérieure métallique est structurée de manière à ce que le facteur de remplissage soit constant selon la direction x. La comparaison de son évolution avec celui du facteur de qualité de la cavité 20 sans le miroir 31 au-dessus (courbe 52 figure 5B) illustre clairement l'amélioration du facteur de qualité de la cavité 30 provoquée par l'ajout du miroir, particulièrement pour des facteurs de remplissage inférieurs à 80%. Par exemple, pour un facteur de remplissage ff=40%, l'ajout du miroir 31 permet de passer d'un facteur de qualité Q=20 à Q=120. La cavité 30 du mode de réalisation de la figure 5 présente une dépendance en polarisation. En effet, elle ne peut fonctionner qu'avec un rayonnement incident possédant une polarisation TE (selon la direction y).

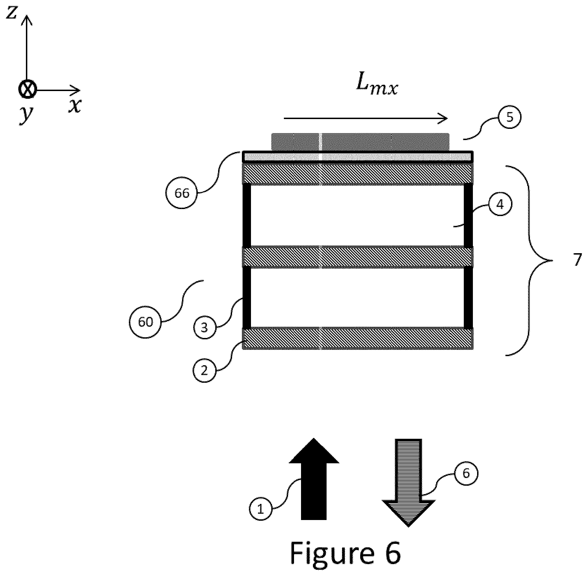

Dans un quatrième mode de réalisation, une cavité électromagnétique THz 60 est similaire à la cavité électromagnétique 10 du mode de réalisation de la figure 1, à 2 différences majeures près. Premièrement, la couche supérieure métallique est structurée de manière à être une antenne possédant une fréquence de résonance égale à celle de cavité électromagnétique 10 formée par le DBR 7 et la couche supérieure métallique 5. Deuxièmement, elle comprend une couche de phase 66 supplémentaire de bas indice entre la couche supérieure de haut indice et la couche métallique. Dans un exemple donné à titre non limitatif cette couche de phase est en polymère d'indice intermédiaire entre l'air et le silicium 2. Ce mode de réalisation illustré dans la figure 6.

Dans ce quatrième mode de réalisation, la couche supérieure métallique 5 est continue et possède une longueur Lₘₓ selon la direction x de manière à être une antenne métallique dipolaire possédant une fréquence de résonance égale à celle de cavité 10. Ce choix d'antenne dipolaire permet une exaltation du facteur de qualité et une exaltation locale du champ électrique du mode Tamm lorsqu'un rayonnement incident de polarisation TM (selon la direction x) se propage selon la direction z dans la cavité.

Cette exaltation du champ donne accès à une densité d'énergie importante. Elle permet, à partir d'un rayonnement incident à fréquence THz de polarisation TM (selon la direction x) et se propageant selon la direction z dans la cavité, de réaliser un couplage lumière matière en insérant des éléments actifs de dimension caractéristique de quelques dizaines de microns dans la région où le champ électrique du mode Tamm est exalté (par exemple aux coins de l'antenne 5 dans le troisième mode de réalisation de l'invention).

Dans un autre mode de réalisation, la couche supérieure métallique 5 est structurée de manière à être une antenne de type bowtie, patch ou un résonateur de type split ring resonator possédant une fréquence de résonance égale à celle de la cavité 10 et permettant d'obtenir une exaltation locale du champ électrique des modes Tamm. Les structures d'antennes bowtie, patch ou les split ring resonator, bien connues de l'homme de l'art, permettent d'obtenir une exaltation locale du champ électrique du mode Tamm allant jusqu'à plusieurs ordres de grandeur (entre les deux triangles se faisant face dans le cas de l'antenne bowtie et dans la région du gap dans le cas du split-ring resonator).

Cette exaltation donne accès à une densité d'énergie extrêmement intéressante pour réaliser un couplage lumière matière en insérant des éléments actifs de dimensions caractéristiques de quelques dizaines de microns dans les régions où le champ électrique du mode Tamm est exalté.

Dans un autre mode de réalisation, la couche supérieure métallique 5 est structurée de manière à optimiser sa structure d'antenne pour exalter son interaction avec le DBR et permettant de contrôler le profil transverse et la polarisation du mode Tamm excité par le rayonnement incident 1 : dans un exemple non-limitatif, une antenne bowtie permet une localisation du mode, ainsi qu'une concentration du champ électrique, dans l'espacement entre les 2 parties de l'antenne. Dans un autre exemple non-limitatif, une antenne dipolaire peutêtre choisie 1D (une ligne plus fine selon l'une de ses dimensions et possédant une fréquence de résonance THz selon une seule de ses dimensions) ou 2D (de forme carrée). Il est ainsi possible de choisir d'avoir un contrôle sur la polarisation ou au contraire d'y être insensible. En effet, une antenne 1D possède une résonance pour une polarisation TM ou TE bien définie et permet de fixer la polarisation du mode de Tamm excité. A l'inverse, une antenne 2D résonne de la même façon pour les deux polarisations TM et TE permettant d'exciter un mode de Tamm avec ces deux polarisations.

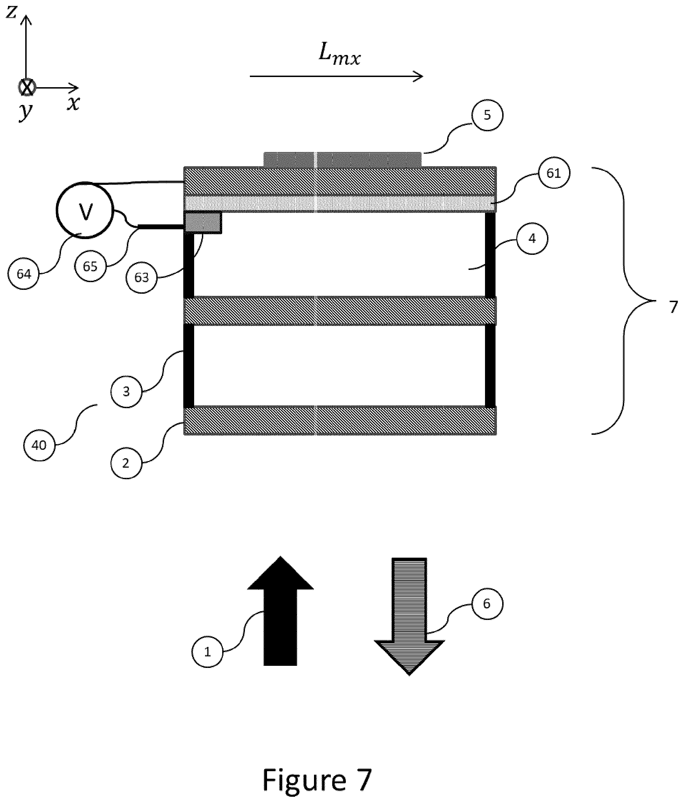

[Fig. 7] illustre un cinquième mode de réalisation de l'invention dans laquelle une cavité électromagnétique 40 à modes de Tamm permet le couplage d'un rayonnement incident 1 à une fréquence THz avec une région active 61 en graphène. Dans ce mode de réalisation, l'empilement 7 est identique à celui du mode de réalisation de la figure 3. La couche supérieure métallique est identique à celle du quatrième mode de réalisation, elle possède une fréquence de résonance égale à celle de cavité 10. La cavité 40 comprend de plus une couche de graphène 61 en dessous de la couche supérieure en diélectrique, au contact de la face inférieure de cette dernière. La couche de graphène 61, qui peut être partiellement encapsulé est ici l'élément actif ou la région active de la cavité 40.

Dans le mode de réalisation de la figure 7, la couche de graphène est continue et recouvre entièrement la face inférieure de la couche supérieure en diélectrique du DBR. Cette couche de graphène est déposée par déposition chimique en phase vapeur (ou CVD en anglais).

Dans un autre mode de réalisation, la couche de graphène est continue et ne recouvre pas entièrement la face inférieure de la couche supérieure en diélectrique du DBR. C'est un feuillet, par exemple de quelques dizaines de microns de côté, réalisé par exfoliation et placé au centre du mode de Tamm, c'est-à-dire au maximum du champ électrique Tamm exalté par la couche supérieure métallique. Dans un autre mode de réalisation, la couche supérieure métallique 5 est structurée de manière à être une antenne possédant une fréquence de résonance égale à celle de la cavité 10 et permettant d'obtenir une exaltation locale du champ électrique du mode Tamm. Dans ce mode de réalisation aussi, le feuillet de graphène 61 est placé en dessous de la couche supérieure en diélectrique du DBR au maximum du champ électrique du mode Tamm afin d'atteindre un couplage lumière-matière le plus intense possible.

La couche de graphène 61 peut être monocouche, auquel cas son épaisseur est celle d'un atome de carbone (environ 3.5 Å). Alternativement, la couche de graphène 61 peut être un empilement selon la direction z d'une pluralité n de monocouches, auquel cas son épaisseur est égale à n×3.5 Å .

De plus, la cavité 40 comprend une couche métallique 63, dite électrode, en dessous de la couche de graphène 61 mais qui ne recouvre pas complétement cette dernière. L'électrode 63 est une couche métallique mise en contact avec la couche en graphène 61 par un contact électrique métallique (non représenté dans la figure 7). Dans le mode de réalisation de la figure 7, ce contact métallique est assuré par un dépôt métallique d'or de quelques microns de côté et d'environ 200 nm d'épaisseur. Dans un autre mode réalisation, le contact peut être réalisé dans tout autre métal ou en utilisant une couche conductrice comme du graphène dopé.

Un circuit électrique 64 est relié à l'électrode 63 par une ligne métallique 65 sortant de la cavité 40. De préférence la ligne métallique 65 possède un diamètre très inférieur à la longueur d'onde de résonance de la cavité de manière à limiter les perturbations du mode de Tamm introduites par cette ligne métallique. Par ailleurs, le circuit électrique est aussi relié à la couche de métal 5 ou à la couche supérieure en diélectrique du DBR. Le circuit électrique 64 est configuré pour appliquer une différence de potentiel ou tension de grille entre l'électrode 63 et la couche de métal 5.

L'application d'une tension de grille par le biais de l'électrode 63 reliée au circuit électrique 64 crée un champ électrique au niveau de la couche de graphène et permet d'imposer ou de fixer un niveau de Fermi à cette couche. On rappelle ici que le graphène possède une bande interdite de 0 eV et une structure de bande présentant une dispersion linéaire en cône de Dirac. Sans ce champ électrique le niveau de Fermi est mal contrôlé, le circuit électrique permet donc de dicter le comportement électronique et optique du graphène. Ainsi en choisissant une tension de grille telle que le niveau de Fermi soit à 0 eV, qui correspond au point de Dirac dans la relation de dispersion, la conductivité du graphène pour des fréquences THz est gouvernée par des processus interbandes. A l'inverse, en choisissant une tension de grille telle que le niveau de Fermi soit supérieur à quelques meV l'absorption du graphène aux fréquences THz est gouverné par des processus intrabandes.

Ainsi selon la tension de grille appliquée par le circuit électrique 64 et choisie par l'utilisateur, la région active en graphène 61 se comportera comme un milieu à gain optique, un photoconducteur, un modulateur ou un absorbant pour le mode Tamm excité dans la cavité par le rayonnement incident THz 1.

## Revendications

1. Cavité électromagnétique (10, 20, 30, 40, 60) à modes de Tamm possédant une fréquence de résonance dans le domaine THz, comportant :
- un miroir interférentiel réfléchissant dans le domaine THz constitué d'un empilement de couches diélectriques (7) comprenant une alternance, selon une direction z, de deux couches différentes, une couche dite d'indice de réfraction élevé (2) et un couche dite d'indice de réfraction faible (4), l'indice de la couche de réfraction faible étant inférieure à celle de la couche d'indice de réfraction élevée, fabriqué par empilement mécanique de couches ou par assemblage de couches diélectrique les unes sur les autres ;
- une couche supérieure métallique (5) déposée ou reportée sur une couche supérieure de diélectrique dudit miroir interférentiel de manière à former une structure supportant au moins un mode de Tamm dans le domaine THz, la couche supérieure métallique (5) étant structurée de manière à former une antenne possédant une fréquence de résonance égale à celle de la cavité électromagnétique.

2. Cavité électromagnétique (40) selon l'une quelconque des revendications précédentes, dans laquelle la couche supérieure métallique est continue.

3. Cavité électromagnétique selon l'une quelconque des revendications précédente, dans laquelle la couche supérieure métallique est structurée de manière à contrôler le mode transverse et la polarisation du ou des modes de Tamm.

4. Cavité électromagnétique selon la revendication 1, dans laquelle la couche supérieure métallique structurée forme une antenne de type *bowtie, patch, dipolaire* ou un *split-ring resonator.*

5. Cavité électromagnétique (10, 20, 30, 40, 60) à modes de Tamm possédant une fréquence de résonance dans le domaine THz, comportant :
- un miroir interférentiel réfléchissant dans le domaine THz constitué d'un empilement de couches diélectriques (7) comprenant une alternance, selon une direction z, de deux couches différentes, une couche dite d'indice de réfraction élevé (2) et un couche dite d'indice de réfraction faible (4), l'indice de la couche de réfraction faible étant inférieure à celle de la couche d'indice de réfraction élevée, fabriqué par empilement mécanique de couches ou par assemblage de couches diélectrique les unes sur les autres ;
- une couche supérieure métallique (5) déposée ou reportée sur une couche supérieure de diélectrique dudit miroir interférentiel de manière à former une structure supportant au moins un mode de Tamm dans le domaine THz, la couche supérieure métallique étant structurée de manière à former un réseau de bandes métalliques de largeur s, de période p, séparée d'une distance a et de facteur de remplissage ff=s/p avec p=s+a.

6. Cavité électromagnétique (20, 30) selon la revendication précédente, dans laquelle le facteur de remplissage ff du réseau de bandes métalliques varie selon la direction x de manière à permettre le couplage d'une pluralité de fréquences THz différentes d'un rayonnement incident avec ladite cavité électromagnétique.

7. Cavité électromagnétique selon l'une quelconque des revendications précédentes (40), dans lequel au moins l'une des couches d'indice de réfraction faible du miroir interférentiel est formée par un espaceur (3) séparant deux couches d'indice de réfraction élevé de manière à obtenir une couche d'air entre deux couches d'indice de réfraction élevé.

8. Cavité électromagnétique selon l'une quelconque des revendications précédentes, dans laquelle les couches diélectriques sont en silicium haute résistivité, en GaAs semi-isolant ou en quartz.

9. Cavité électromagnétique selon l'une quelconque des revendications précédentes, dans laquelle les couches diélectriques sont en un film polymère tel que le Kapton.

10. Cavité électromagnétique (30) selon l'une quelconque des revendications précédentes comprenant une couche dite couche miroir (31) au-dessus de la couche supérieure métallique et séparée par une couche de diélectrique ladite couche miroir étant constituée d'une couche inférieure métallique (32) et d'une couche supérieure support (33).

11. Cavité électromagnétique (40) selon l'une quelconque des revendications précédentes, comprenant un élément actif (61) d'une taille caractéristique de comprise entre 1 et 100 microns, de préférence 10 et 40 microns placé dans la cavité de manière à pouvoir être couplé au mode de Tamm excité dans ladite cavité.

12. Cavité électromagnétique (40) selon la revendication précédente, dans laquelle l'élément actif (61) est placé au sein d'une couche d'air du miroir interférentiel située en dessous de la couche supérieure diélectrique.

13. Cavité électromagnétique (40) selon l'une quelconque des revendications 11 à 12 dans laquelle l'élément actif (61) est en graphène.

14. Cavité électromagnétique (40) selon la revendication précédente, comprenant une couche métallique dite électrode (63) en contact électrique avec l'élément actif en graphène et reliée à un circuit électrique (64) configuré pour appliquer une tension de grille au dit élément actif en graphène.

15. Cavité électromagnétique selon l'une quelconque des revendications précédentes, dans laquelle la couche supérieure métallique (5) est une couche de supraconducteur.

16. Procédé d'utilisation d'une cavité électromagnétique selon l'une quelconque des revendications précédentes, comprenant :
- l'illumination de ladite cavité par un rayonnement incident (1) se propageant selon ladite direction z à une fréquence THz égale à la fréquence de résonance de ladite cavité ;
- l'excitation d'un mode de Tamm à une fréquence de résonance de la cavité.

## Patentansprüche

1. Elektromagnetischer Hohlraum (10, 20, 30, 40, 60) mit Tamm-Modi mit einer Resonanzfrequenz im THz-Bereich, umfassend:
- einen Interferenzspiegel, der im THz-Bereich reflektiert und aus einer Stapelung dielektrischer Schichten (7) besteht, umfassend in z-Richtung abwechselnd zwei verschiedene Schichten, eine sogenannte Schicht mit hohem Brechungsindex (2) und eine sogenannte Schicht mit niedrigem Brechungsindex (4), wobei der Brechungsindex der Schicht mit niedrigem Brechungsindex geringer ist als jener der Schicht mit hohem Brechungsindex, hergestellt durch mechanisches Stapeln von Schichten oder durch Zusammenbau dielektrischer Schichten übereinander;
- eine obere Metallschicht (5), die auf eine obere dielektrische Schicht des Interferenzspiegels aufgebracht oder aufgetragen ist, sodass sie eine Struktur bildet, die mindestens einen Tamm-Modus im THz-Bereich unterstützt, wobei die obere Metallschicht (5) strukturiert ist, sodass sie eine Antenne mit einer Resonanzfrequenz bildet, die gleich jener des elektromagnetischen Hohlraums ist.

2. Elektromagnetischer Hohlraum (40) nach einem der vorstehenden Ansprüche, wobei die obere Metallschicht durchgehend ist.

3. Elektromagnetischer Hohlraum nach einem der vorstehenden Ansprüche, wobei die obere Metallschicht strukturiert ist, sodass sie den Transversalmodus und die Polarisation des Tamm-Modus bzw. der Tamm-Modi steuert.

4. Elektromagnetischer Hohlraum nach Anspruch 1, wobei die strukturierte obere Metallschicht eine Antenne vom Typ *Bowtie, Patch, Dipolar* oder einen *geschlitzten Ringresonator* bildet.

5. Elektromagnetischer Hohlraum (10, 20, 30, 40, 60) mit Tamm-Modi mit einer Resonanzfrequenz im THz-Bereich, umfassend:
- einen Interferenzspiegel, der im THz-Bereich reflektiert und aus einer Stapelung dielektrischer Schichten (7) besteht, umfassend in z-Richtung abwechselnd zwei verschiedene Schichten, eine sogenannte Schicht mit hohem Brechungsindex (2) und eine sogenannte Schicht mit niedrigem Brechungsindex (4), wobei der Brechungsindex der Schicht mit niedrigem Brechungsindex geringer ist als jener der Schicht mit hohem Brechungsindex, hergestellt durch mechanisches Stapeln von Schichten oder durch Zusammenbau dielektrischer Schichten übereinander;
- eine obere Metallschicht (5), die auf eine obere dielektrische Schicht des Interferenzspiegels aufgebracht oder aufgetragen ist, sodass sie eine Struktur bildet, die mindestens einen Tamm-Modus im THz-Bereich unterstützt, wobei die obere Metallschicht strukturiert ist, sodass sie ein Gitter aus Metallstreifen mit einer Breite s, einer Periode p, einem Abstand a und einem Füllfaktor ff=s/p mit p=s+a bildet.

6. Elektromagnetischer Hohlraum (20, 30) nach dem vorstehenden Anspruch, wobei der Füllfaktor ff des Gitters aus Metallstreifen in x-Richtung variiert, sodass die Kopplung einer Vielzahl unterschiedlicher THz-Frequenzen einer einfallenden Strahlung mit dem elektromagnetischen Hohlraum ermöglicht wird.

7. Elektromagnetischer Hohlraum nach einem der vorstehenden Ansprüche (40), wobei mindestens eine der Schichten mit niedrigem Brechungsindex des Interferenzspiegels durch einen Abstandhalter (3) gebildet wird, der zwei Schichten mit hohem Brechungsindex trennt, sodass zwischen zwei Schichten mit hohem Brechungsindex eine Luftschicht entsteht.

8. Elektromagnetischer Hohlraum nach einem der vorstehenden Ansprüche, wobei die dielektrischen Schichten aus hochohmigem Silizium, halbisolierendem GaAs oder Quarz bestehen.

9. Elektromagnetischer Hohlraum nach einem der vorstehenden Ansprüche, wobei die dielektrischen Schichten aus einem Polymerfilm wie Kapton bestehen.

10. Elektromagnetischer Hohlraum (30) nach einem der vorstehenden Ansprüche, umfassend eine sogenannte Spiegelschicht (31) über der oberen Metallschicht, die durch eine dielektrische Schicht davon getrennt ist, wobei die Spiegelschicht aus einer unteren Metallschicht (32) und einer oberen Trägerschicht (33) besteht.

11. Elektromagnetischer Hohlraum (40) nach einem der vorstehenden Ansprüche, umfassend ein aktives Element (61) mit einer charakteristischen Größe zwischen 1 und 100 Mikrometern, vorzugsweise zwischen 10 und 40 Mikrometern, das im Hohlraum angeordnet ist, sodass es mit dem in diesem Hohlraum angeregten Tamm-Modus gekoppelt werden kann.

12. Elektromagnetischer Hohlraum (40) nach dem vorstehenden Anspruch, wobei das aktive Element (61) innerhalb einer Luftschicht des Interferenzspiegels angeordnet ist, die sich unterhalb der oberen dielektrischen Schicht befindet.

13. Elektromagnetischer Hohlraum (40) nach einem der Ansprüche 11 bis 12, wobei das aktive Element (61) aus Graphen besteht.

14. Elektromagnetischer Hohlraum (40) nach dem vorstehenden Anspruch, umfassend eine Metallschicht, eine sogenannte Elektrode (63), die in elektrischem Kontakt mit dem aktiven Graphenelement steht und mit einer elektrischen Schaltung (64) verbunden ist, die konfiguriert ist, um eine Gate-Spannung an das aktive Graphenelement anzulegen.

15. Elektromagnetischer Hohlraum nach einem der vorstehenden Ansprüche, wobei die obere Metallschicht (5) eine Supraleiterschicht ist.

16. Verfahren zur Verwendung eines elektromagnetischen Hohlraums nach einem der vorstehenden Ansprüche, umfassend:
- Beleuchten des Hohlraums mit einfallender Strahlung (1), die sich in der z-Richtung mit einer Frequenz THz ausbreitet, die gleich der Resonanzfrequenz des Hohlraums ist;
- Anregen eines Tamm-Modus mit einer Resonanzfrequenz des Hohlraums.

## Claims

1. Tamm electromagnetic cavity (10, 20, 30, 40, 60) possessing a resonant frequency in the THz domain, comprising:
- an interference mirror that is reflective in the THz domain, this mirror consisting of a stack of dielectric layers (7) comprising an alternation, in a z-direction, of two different layers, a layer referred to as the layer of high refractive index (2) and a layer referred to as the layer of low refractive index (4), the index of the layer of low refraction being lower than that of the layer of high refractive index, being manufactured by stacking layers mechanically or by joining dielectric layers to one another;
- an upper metal layer (5) deposited on or added to an upper dielectric layer of said interference mirror so as to form a structure that supports at least one Tamm mode in the THz domain, the upper metal layer (5) being structured so as to form an antenna possessing a resonant frequency equal to that of the electromagnetic cavity.

2. Electromagnetic cavity (40) according to any one of the preceding claims, wherein the upper metal layer is continuous.

3. Electromagnetic cavity according to any one of the preceding claims, wherein the upper metal layer is structured so as to control the transverse mode and the polarization of the one or more Tamm modes.

4. Electromagnetic cavity according to claim 1, wherein the structured upper metal layer forms a bow-tie antenna, a patch antenna, a dipole antenna, or a split-ring resonator.

5. Tamm electromagnetic cavity (10, 20, 30, 40, 60) possessing a resonant frequency in the THz domain, comprising:
- an interference mirror that is reflective in the THz domain, this mirror consisting of a stack of dielectric layers (7) comprising an alternation, in a z-direction, of two different layers, a layer referred to as the layer of high refractive index (2) and a layer referred to as the layer of low refractive index (4), the index of the layer of low refraction being lower than that of the layer of high refractive index, and being manufactured by stacking layers mechanically or by joining dielectric layers to one another;
- an upper metal layer (5) deposited on or added to an upper dielectric layer of said interference mirror so as to form a structure that supports at least one Tamm mode in the THz domain, the upper metal layer being structured so as to form a grating of metal strips of width s and of period p, separated by a distance a, and of fill factor ff=s/p with p=s+a.

6. Electromagnetic cavity (20, 30) according to the preceding claim, wherein the fill factor ff of the grating of metal strips varies in the x-direction so as to allow a plurality of different THz frequencies of incident radiation to be coupled to said electromagnetic cavity.

7. Electromagnetic cavity according to any one of the preceding claims (40), wherein at least one of the layers of low refractive index of the interference mirror is formed by a spacer (3) separating two layers of high refractive index so as to obtain a layer of air between two layers of high refractive index.

8. Electromagnetic cavity according to any one of the preceding claims, wherein the dielectric layers are made of high-resistivity silicon, of semiinsulating GaAs or of quartz.

9. Electromagnetic cavity according to any one of the preceding claims, wherein the dielectric layers are made of a polymer film such as Kapton.

10. Electromagnetic cavity (30) according to any one of the preceding claims comprising a layer referred to as the mirror layer (31), above the upper metal layer and separated by a dielectric layer, said mirror layer consisting of a lower metal layer (32) and an upper carrier layer (33).

11. Electromagnetic cavity (40) according to any one of the preceding claims, comprising an active element (61) of a characteristic size comprised between 1 and 100 microns, and preferably 10 and 40 microns, placed in the cavity so as to be able to be coupled to the Tamm mode excited in said cavity.

12. Electromagnetic cavity (40) according to the preceding claim, wherein the active element (61) is placed within a layer of air of the interference mirror, said layer being located below the upper dielectric layer.

13. Electromagnetic cavity (40) according to any one of claims 11 to 12, wherein the active element (61) is made of graphene.

14. Electromagnetic cavity (40) according to the preceding claim, comprising a metal layer referred to as the electrode (63) making electrical contact with the graphene active element and connected to an electrical circuit (64) configured to apply a gate voltage to said graphene active element.

15. Electromagnetic cavity according to any one of the preceding claims, wherein the upper metal layer (5) is a layer of superconductor.

16. Method for using an electromagnetic cavity according to any one of the preceding claims, comprising:
- illuminating said cavity with incident radiation (1) propagating in said z-direction at a THz frequency equal to the resonant frequency of said cavity;
- exciting a Tamm mode at a resonant frequency of the cavity.
